# EUROPEAN PATENT SPECIFICATION

(11) **EP 1 922 373 B1**
(45) Date of publication and mention of the grant of the patent: **03.03.2010**
(21) Application number: 06814298.3
(22) Date of filing: 07.09.2006
(51) Int. Cl.: C09D 11/10

(54) **ACRYLATED POLYAMIDE-CONTAINING PRINTING INKS**
DRUCKTINTEN MIT ACRYLPOLYAMID
ENCRES D'IMPRIMERIE CONTENANT UN POLYAMIDE ACRYLIQUE

(30) Priority: 07.09.2005 GB 0518275
(43) Date of publication of application: 21.05.2008
(73) Proprietor: Sun Chemical Corporation, Parsippany, NJ 07054-1285 (US)
(72) Inventor: ILLSLEY, Derek, Ronald, Parsippany, NJ 07054-1285 (US); THOMPSON, Martin, John, Parsippany, NJ 07054-1285 (US); MAYERS, Sean Philip, Francis, Parsippany, NJ 07054-1285 (US); WILSON, John, Parsippany, NJ 07054-1285 (US)
(74) Representative: Denness, James Edward
(86) International application number: PCT/US2006/034895
(87) International publication number: WO 2007/030643

(56) References cited:
- EP-A2- 0 381 354
- WO-A-03/028992
- WO-A2-2006/067639
- GB-A- 1 564 543

## Description

The present invention relates to a series of new acrylate-modified polyamide resins and provides processes for their preparation and methods and compositions using them, especially for use in printing inks, and particularly for inks printable by offset lithography.

Acrylated polyamide oligomers are used as a component of many types of coating composition, such as printing inks, varnishes and the like. We have now discovered that the incorporation of fatty acids into such oligomers can reduce the problem, well known in the printing industry, of misting.

"Misting" is the term popularly applied to the formation of small airborne droplets of ink which are ejected from the rotating rollers of printing machines. As printing machines have begun to operate at increasingly high speeds, the problem of misting has got worse. Misting not only wastes ink, it represents a health hazard to workers in the printing industry and requires extraordinary measures in order to keep printing presses and the rooms in which they are housed clean.

Many workers have investigated the problem and many solutions have been proposed. Some of these are described, for example, in Newspaper Techniques, April 2002, 52-54; GATFWorld, March/April 1996, 8(2), 11,12; "Factors affecting the misting of UV curable inks", Hutchinson I D; Richards A M [Paper presented at RadTech Europe, Maastricht, 25-27 September 1995,231-241]; American Ink Maker, March 1979, 57(3), 47,48,52,54,108-112. As can be seen, for example, in the last of these documents, a large number of factors are implicated in misting and many different expedients have been adopted in an effort to reduce or eliminate it, including altering process variables, environmental conditions and various elements of the ink composition.

We have surprisingly found that misting may be reduced or even eliminated by the use of a specifically formulated acrylated aminoamide oligomer.

EP 0 505 031 A2 describes and claims a series of aminoamide acrylate polymers which are curable by actinic radiation and which are said to be useful as hot melt adhesives. The polymers described in this specification are all solids with a very high molecular weight, which gives a low acrylate density, making them unsuitable as a sole vehicle in a lithographic printing ink since the cure would not be sufficient. However, by preparing polymer resins similar to these but which are liquid at room temperature, we have found that they may be incorporated into printing inks and that inks incorporating these resins are resistant to misting.

Thus, the present invention consists in a printing ink comprising a cross-linkable component and a photoinitiator, wherein the cross-linkable component comprises at least one radiation-curable acrylate-modified aminoamide resin which is the Michael addition product of a polyol ester having at least two (meth)acrylate ester groups with an aminoamide thermoplastic polymer, the aminoamide thermoplastic polymer being the reaction product of a polyamine with an acid component which comprises a polymerised unsaturated fatty acid and a monofunctional C₂ - C₂₂ fatty acid, from 1 to 25% of the acid functionality forming the aminoamide polymer being said C₂ - C₂₂ fatty acid, the resin being liquid at 25°C.

The aminoamide polymer, which is the starting material for the preparation of the resin of the present invention, is the reaction product of a polymerised unsaturated fatty acid and a monofunctional C₂ - C₂₂ fatty acid with a polyamine, preferably a diamine.

Dimer acid is, as is well known to those skilled in the field of resins, a polymeric fatty acid, or, more commonly, mixture of polymeric fatty acids, prepared by polymerisation of unsaturated fatty acids, commonly obtained from tall oil. Although the major part of such dimer acids is composed of one or more dibasic acids, they typically also contain small amounts of monobasic acids (for example, the material used in the Examples hereof contains about 0.2% monobasic fatty acids) and small amounts of tri- and higher basic acids. If desired, the polymerised product may be separated into its components, but, more usually, the mixture of acids obtained from the polymerisation is used, as is. Hydrogenated dimer acids may also be employed. Where the polymerised fatty acid contains monobasic acid, this is not counted towards the amount of monofunctional C₂ - C₂₂ fatty acid required in accordance with the present invention.

In general, the diamine is preferably an aliphatic, cycloaliphatic or aromatic diamine having from 2 to 36 carbon atoms. Examples of such diamines which may be employed include: aliphatic diamines having from 1 to 36 carbon atoms, such as methylenediamine, ethylenediamine, trimethylenediamine, hexamethylenediamine, methylpentamethylenediamine and polyether diamines; aromatic diamines having from 6 to 20 carbon atoms, such as toluenediamine, p,p'-diaminodiphenylmethane, and xylenediamine; cycloaliphatic diamines, such as diaminocyclohexane; and heterocyclic diamines, such as piperazine, 4,4'-dipiperidinyl, and aminoethylpiperazine. In addition, tri- and higher amines may be used, but preferably only in combination with one or more diamines and preferably in sufficiently small amounts as to prevent or minimise premature gelation. Examples of such polyamines include diethylenetriamine, triethylenetetramine, tetraethylenepentamine and bishexamethylenetriamine.

Of the diamines, we especially prefer to use piperazine, and a polyamide prepared by the reaction of dimer acid with piperazine is most preferred.

In accordance with the present invention, we have surprisingly found that the incorporation of a minor amount of a monofunctional fatty acid into the polyamide substantially reduces, and may even enable the elimination of, misting during a printing process using an ink based on the oligomer prepared from the polyamide. The monofunctional fatty acid should contain from 2 to 22 carbon atoms, preferably from 4 to 20, and more preferably from 6 to 20, carbon atoms. The acid may be a straight or branched chain compound and may be saturated or unsaturated. Examples of suitable acids include lauric acid, linseed oil fatty acid, tall oil fatty acid, pelargonic acid, octanoic acid, coconut oil fatty acid, soya bean oil fatty acid, olive oil fatty acid, peanut oil fatty acid, cottonseed oil fatty acid, capric acid, myristic acid, palmitic acid, stearic acid, palmitoleic acid, oleic acid, linoleic acid, linolenic acid, eleostearic acid, ricinoleic acid, hexanoic acid or a mixture of any two or more thereof.

The monofunctional fatty acid should provide from 1 to 25% of the acid functionality in the polymerised unsaturated fatty acid/ monofunctional fatty acid/polyamine system. Preferably, the monofunctional fatty acid provides from 3 to 20%, more preferably from 4.5 to 20%, of that functionality. If the polymerised fatty acid contains any monofunctional acids, those are not counted towards the amount of 1-25,3-20 or 4.5-20, respectively. The inclusion of the monofunctional fatty acid can have a significant effect on the viscosity of the final product, and, as is well known in the art, it is important to maintain a careful control over the viscosity of printing inks. Thus, although the ranges specified are appropriate in general, for any specific formulation, it may be necessary to select the amount of fatty acid from a narrower range. For example, when the acrylate is trifunctional glycerol propoxylate triacrylate (GPTA), more than 10% of acid functionality from a monofunctional fatty acid gives a final polyamide acrylate with an unacceptably low viscosity. Conversely, when the acrylate is tetrafunctional polyalkoxylated pentaerythritol tetraacrylate (PPTA) anything less than 15% of acid functionality from a fatty acid gives a final polyamide acrylate with an unacceptably high viscosity.

The reaction between an acid and a polyamine is well known and may be carried out under well known conditions. The reaction is preferably carried out in the presence of a solvent suitable for forming an azeotrope with water. Otherwise, the nature of the solvent is not critical to the invention, provided that it has no adverse effect on the reaction or on the reagents involved. Examples of suitable solvents include aromatic hydrocarbons, such as xylene, toluene or benzene. There is equally no particular restriction on the reaction temperature; however, the reaction is preferably carried out at a temperature greater than 100°C, so as to remove the water formed during the reaction.

The polyamide so prepared should preferably have an amine number of from 40 to 60 mgKOH/g, and the amounts of polyamine and polycarboxylic acid used should be so chosen as to achieve a product having such an amine number. If necessary, the progress of the reaction may be monitored, as is well known in the art, so as to enable the reaction to be terminated when the required amine number has been achieved. Preferably the aminoamide thermoplastic polymer has an amine number of from 45 to 55mgKOH/g, more preferably about 50mgKOH/g.

This polyamide is then reacted with a polyol ester having at least two (meth)acrylate ester groups. The expression "(meth)acrylate" is used herein to mean "acrylate or methacrylate or a mixture thereof". The polyol ester should have at least 2, preferably at least 3, and more preferably from 3 to 6 such (meth)acrylate ester groups. More preferably the polyol ester is an acrylate with a functionality of 3 or 4.

Preferably the polyol ester is an acrylate or methacrylate of a C₂ - C₂₀ aliphatic or cycloaliphatic polyol.

Examples of suitable polyol esters include: tripropyleneglycol diacrylate, dipropyleneglycol diacrylate, diethyleneglycol diacrylate, propoxylated neopentylglycol diacrylate, diacrylates of polyethyleneglycol (e.g. PEG200 diacrylate), hexanediol diacrylate, glycerol triacrylate, glycerol trimethacrylate, sorbitol triacrylate, sorbitol trimethacrylate, trimethylolethane triacrylate, trimethylolethane trimethacrylate, trimethylolpropane triacrylate, dimethylolpropane tetraacrylate, dimethylolpropane tetramethacrylate, trimethylolpropane trimethacrylate, ethoxylated trimethylolpropane triacrylate, ethoxylated trimethylolpropane trimethacrylate, glycerol propoxylate triacrylate, glycerol propoxylate trimethacrylate, pentaerythritol triacrylate, pentaerythritol trimethacrylate, pentaerythritol tetraacrylate, pentaerythritol tetramethacrylate, dipentaerythritol hexaacrylate, dipentaerythritol hexamethacrylate, ethoxylated pentaerythritol tetraacrylate, propoxylated pentaerythritol tetraacrylate, sucrose pentaacrylate, sucrose pentamethacrylate, sucrose tetraacrylate, sucrose tetramethacrylate, sucrose triacrylate and sucrose trimethacrylate, of which glycerol propoxylate triacrylate is most preferred.

The Michael reaction between the polyamide and the polyol ester is a well known reaction and may be carried out under well known conditions. The reaction will often take place readily at ambient temperature. However, if desired, somewhat elevated temperatures may be employed, for example, a temperature from 20 to 100, more preferably from 20 to 70°C.

The polyol ester is preferably employed in an amount in excess of the simple stoichiometric amount needed to react with all of the free amine groups in the polyamide, so that unreacted acrylate groups are left in the reaction mixture.

The ratio of the initial (meth)acrylate groups of the polyol ester to the initial amino functional groups of the aminoamide polymer is preferably at least 4:1. More preferably this ratio is at least 8:1, still more preferably greater than 8:1 1 and no more than 30:1, still more preferably greater than 8:1 and no more than 20:1, and most preferably greater than 8:1 and no more than 15:1.

The printing ink of the present invention is preferably formulated for offset lithography.

The printing ink of the present invention comprises at least a photoinitiator and a polymerisable resin of the present invention. In addition, it may contain any one or more of other well known materials which are commonly incorporated into such compositions to provide particular desired properties either in the curable composition or in the final cured product, and, in particular, will normally contain a pigment or other colorant.

### Non-limiting examples of such other components are as follows:

### Monomers and oligomers

The printing ink may, if desired, contain other radiation-curable monomers and/or oligomers. Examples of suitable acrylate oligomers include aliphatic or aromatic urethane acrylates, polyether acrylates, polyester acrylates and epoxy acrylates (such as bisphenol A epoxy acrylate). Examples of suitable acrylate monomers include hexanediol diacrylate, trimethylolpropane triacrylate, di-trimethylolpropane tetraacrylate, di-pentaerythritol pentaacrylate, polyether acrylates, such as ethoxylated trimethylol propane triacrylate, glycerol propoxylate triacrylate, ethoxylated pentaerythritol tetraacrylate, and epoxy acrylates such as dianol diacrylate (= the diacrylate of 2,2-bis[4-(2-hydroxyethoxy)phenyl]propane, Ebecryl 150 from UCB) and glycol diacrylates such as tripropylene glycol diacrylate.

### Initiators

The printing ink of the present invention will contain, in addition to the resin of the present invention, a photoinitiator. Such initiators are well known in the art, and there is no particular restriction on the choice of initiator for use in the present invention.

In general, a blend of several photoinitiators and an anime synergist are preferably used to achieve the desired balance of product properties. The photoinitiators may be of either the cleavage or hydrogen abstraction type and are preferably selected from the following photoinitiator classes: benzophenones, thioxanthones, hydroxyalkylphenones, aminoalkylphenones, anthraquinones, acyl phosphine oxides, bis-acyl phosphine oxides, benzil ketals, benzoin ethers, acetophenones, beta ketosulphones, oxime esters and phenyl glyoxic acid esters. The amine synergists are preferably selected from the classes of aliphatic amines, aminoacrylates or esters of 4-dimethylaminobenzoic acid. Sensitisers such as Michler's ketone or its analogues may also be used.

Further examples of photoinitiators, synergists and sensitisers can be found in standard textbooks such as "Chemistry & Technology of UV & EB Formulation for Coatings, Inks & Paints", Volume III, "Photoinitiators for Free Radical Cationic and Anionic Polymerisation", 2nd edition, by J.V. Crivello & K. Dietliker, edited by G. Bradley and published in 1998 by John Wiley & Sons in association with SITA Technology Limited; and "Exploring the Science, Technology and Applications of UV and EB Curing", R.S. Davidson, SITA Technology Ltd., London, 1999, the disclosures of which are incorporated herein by reference.

### Pigments and other colorants

In the context of the present invention, the term 'colorant' covers both materials which endow an actual visual colour and/or another optical property such as fluorescence. Colorants are typically included in amounts of about 20% of total colorant(s) by weight of the total composition.

Broadly speaking, colorants may be considered as falling into two classes, namely dyes, which are substantially soluble in the ink composition, and pigments, which are dispersed in the ink composition in the form of fine particles, if necessary with the aid of a suitable dispersant. Pigments may be selected from a wide range of classes, for example, Pigment Red 57:1, Pigment Red 52:2, Pigment Red 48:2, Pigment Blue 15:3, Pigment Green 7, Pigment Yellow 83, Pigment Yellow 13, Pigment White 6, Pigment Black 7. A non-exhaustive list of examples of such pigments include the following from the Irgalite range ex CIBA: Rubine L4, Bordeaux CM, Red 2BP, Blue LG, Green GLN, Yellow B3R and yellow LBG; as well as Tioxide RHD6 (ex Tioxide) and Special Black 250 (ex Degussa). Other examples of suitable pigments are given in "Printing Ink Manual", fourth edition, Leach R. H. et al. (eds.), Van Nostrand Reinhold, Wokingham, (1988), the disclosure of which is incorporated herein by reference.

### Other additives

Printing ink compositions according to the present invention optionally may also comprise one or more minor ingredients, for example, surfactants, levelling additives, photoinitiator stabilisers, wetting agents and pigment stabilisers. The latter may for example be of polyester, polyurethane or polyacrylate types, especially in the form of high molecular weight block co-polymers, and would typically be incorporated at from 2.5% to 100% by weight of the pigment. Suitable examples are Disperbyk 161 or 162 (ex BYK Chemie) or Solsperse ex Zeneca. Suitable photoinitiator stabilisers include those disclosed in EP-A-0 465 039.

Suitable surfactants are preferably of the non-ionic type, for example Fluorad FC430 (ex 3M Corp.). Such surfactants (when present) are preferably included in an amount of 0.1% to 10% by weight of the total composition.

The amount of the acrylated polyamide used in the printing ink of the present invention may vary over a wide range, as is well known in the art. In general terms, for printing ink compositions, we prefer that the amount should be between 15 and 70%, more preferably 20 to 60%, and most preferably 25-45%.

The application and curing of the compositions of the present invention may be carried out using techniques well known to those skilled in the art, for example, as described in "Printing Ink Manual", fourth edition, referred to above.

The invention is further illustrated by the following non-limiting Examples.

### EXAMPLE 1

### Preparation of acrylated polyamide resin

Dimer acid (Pripol 1013 ex Uniqema, 157.2g, 0.561equivalents) nonanoic acid (4.7g, 0.030 equivalents) and piperazine (33g, 0.767equivalents) were charged into a reaction vessel with sufficient toluene for azeotropic distillation and heated to 120°C with a nitrogen sparge. The reaction was held at 120°C until the amine was fixed, and the mixture was then heated to 190°C and held until all water of reaction had been removed. A sample of the product was titrated with HCl to bromocresol green end-point to show an amine value of 50mgKOH/g. The reaction vessel was then cooled to 60°C and glycerol propoxylate triacrylate (OTA 480 ex UCB 301g, 1.88equivalents) added with a small quantity of inhibitor (butylated hydroxytoluene (BHT), 0.5g). The reaction was held at 60°C until the Michael addition had finished. The product was a yellow liquid of viscosity 60 Poise at 25°C.

### EXAMPLE 2

### Preparation of acrylated polyamide resin

Dimer acid (Pripol 1013 ex Uniqema, 126.8g, 0.453equivalents) octanoic acid (3.4g, 0.023 equivalents) and piperazine (26.6g, 0.619equivalents) were charged into a reaction vessel with sufficient toluene for azeotropic distillation and heated to 120°C with a nitrogen sparge. The reaction was held at 120°C until the amine was fixed, and the mixture was then heated to 190°C and held until all water of reaction had been removed. A sample of the product was titrated with HCl to bromocresol green end-point to show an amine value of 50mgKOH/g. The reaction vessel was then cooled to 60°C and glycerol propoxylate triacrylate (OTA 480 ex UCB 242.8g, 1.58equivalents) added with a small quantity of inhibitor (BHT, 0.4g). The reaction was held at 60°C until the Michael addition had finished. The product was a yellow liquid of viscosity 70 Poise at 25°C.

### COMPARATIVE EXAMPLE 1

### Preparation of acrylated polyamide resin

Dimer acid (Pripol 1013 ex Uniqema, 82.73g, 0.295 equivalents) and piperazine (16.5g, 0.384equivalents) were charged to a reaction vessel with sufficient xylene for azeotropic distillation and heated to 120°C with a nitrogen sparge. The reaction was held at 120°C until the amine was fixed, and the mixture was then heated to 190°C and held until all water of reaction had been removed. A sample of the product was titrated with HCl to bromocresol green end-point to show an amine value of 50mgKOH/g. The reaction vessel was then cooled to 60°C and glycerol propoxylate triacrylate (OTA 480 ex UCB 150.52g, 0.94equivalents) added with a small quantity of inhibitor (BHT, 0.25g). The reaction was held at 60°C until the Michael addition had finished. The product was a yellow liquid of medium viscosity.

### EXAMPLE 3

### Preparation of cyan ink

A standard UV cyan ink was made up with polyester acrylates (50g Ebecryl 657 and 50g Ebecryl 870, both ex UCB), epoxy acrylate (CN104 ex Sartomer 10g), acrylated monomers (GPTA, OTA 480 ex UCB 10g and dianol diacrylate 20g), pigment (Phthalocyanine blue pigment, Sunfast blue ex Sun Chemical 36g), talc (4g), wax (2g) and photoinitiator (18g made up of 25% benzophenone, 25% isopropylthioxanthone, and 50% of 2-ethylhexyl-4-dimethylaminobenzoate) on a 3 roll mill.

A second ink was prepared in the same manner with all the acrylated oligomer components (110g) replaced by a polyamide acrylate made according to Example 1.

A third ink was prepared in the same manner with all the acrylated oligomer components (110g) replaced by a polyamide acrylate made according to Comparative Example 1 (in which the fatty acid was omitted).

All three inks were of similar viscosity (90 Poise at 32°C) and found to have equivalent cure, but the ink made with the fatty acid modified polyamide acrylate of Example 1 had superior misting when measured in the following manner. 1.3cc of ink was evenly distributed on a Tackoscope (Testprint bv The Netherlands), a sheet of paper was affixed under the rollers so as to collect any ink mist from the rollers which were then rotated at 600rpm for 30 seconds. Misting was assessed by visual inspection of the paper.

## Claims

1. A printing ink comprising a cross-linkable component and a photoinitiator, wherein the cross-linkable component comprises at least one radiation-curable acrylate-modified aminoamide resin which is the Michael addition product of a polyol ester having at least two (meth)acrylate ester groups with an aminoamide thermoplastic polymer, the aminoamide thermoplastic polymer being the reaction product of a polyamine with an acid component which comprises a polymerised unsaturated fatty acid and monofunctional C₂ - C₂₂ fatty acid, from 1 to 25% of the acid functionality forming the aminoamide polymer being said monofunctional C₂ - C₂₂ fatty acid, and said percentage excluding any monofunctional fatty acids in the polymerised unsaturated fatty acid, the resin being liquid at 25°C.

2. A printing ink according to Claim 1, in which said monofunctional fatty acid is C₄- C₂₀.

3. A printing ink according to Claim 1, in which the said monofunctional fatty acid is C₆- C₂₀.

4. A printing ink according to Claim 1, in which said monofunctional fatty acid is lauric acid, linseed oil fatty acid, tall oil fatty acid, pelargonic acid, octanoic acid, coconut oil fatty acid, soya bean oil fatty acid, olive oil fatty acid, peanut oil fatty acid, cottonseed oil fatty acid, capric acid, myristic acid, palmitic acid, stearic acid, palmitoleic acid, oleic acid, linoleic acid, linolenic acid, eleostearic acid, ricinoleic acid, hexanoic acid or a mixture of any two or more thereof.

5. A printing ink according to Claim 1, in which said monofunctional fatty acid is octanoic acid or nonanoic acid.

6. A printing ink according to any one of the preceding Claims, in which the monofunctional fatty acid comprises from 3 to 20% of the acid functionality of the acid component.

7. A printing ink according to any one of the preceding Claims, in which the monofunctional Fatty acid comprises from 4.5 to 20% of the acid functionality of the acid component.

8. A printing ink according to any one of the preceding Claims, in which said polyol ester has at least three (meth)acrylate groups.

9. A printing ink according to Claim 8, in which the polyol ester is an acrylate with a functionality of 3 or 4.

10. A printing ink according to any one of the preceding Claims, in which the polyol ester is an acrylate or methacrylate of a C₂ - C₂₀ aliphatic or cycloaliphatic polyol.

11. A printing ink according to Claim 10, in which the polyol ester is glycerol triacrylate, glycerol trimethacrylate, sorbitol triacrylate, sorbitol trimethacrylate, trimethylolethane triacrylate, trimethylolethane trimethacrylate, trimethylolpropane triacrylate, dimethylolpropane tetraacrylate, dimethylolpropane tetramethacrylate, trimethylolpropane trimethacrylate, ethoxylated trimethylolpropane triacrylate, ethoxylated trimethylolpropane trimethacrylate, glycerol propoxylate triacrylate, glycerol propoxylate trimethacrylate, pentaerythritol triacrylate, pentaerythritol trimethacrylate, pentaerythritol tetraacrylate, pentaerythritol tetramethacrylate, dipentaerythritol hexaacrylate, dipentaerythritol hexamethacrylate, ethoxylated pentaerythritol tetraacrylate, propoxylated pentaerythritol tetraacrylate, sucrose pentaacrylate, sucrose pentamethacrylate, sucrose tetraacrylate, sucrose tetramethacrylate, sucrose triacrylate or sucrose trimethacrylate

12. A printing ink according to Claim 10, in which the polyol ester is glycerol propoxylate triacrylate.

13. A printing ink according to any one of the preceding Claims, in which the aminoamide polymer is a reaction product of a polymerised unsaturated fatty acid with a diamine.

14. A printing ink according to Claim 13, in which the polymerised unsaturated fatty acid is a dimer acid.

15. A printing ink according to Claim 13 or Claim 14, in which the diamine is an aliphatic, cycloaliphatic or aromatic diamine having from 2 to 36 carbon atoms.

16. A printing ink according to Claim 15, in which the diamine is ethylenediamine, propylenediamine, trimethylenediamine, tetramethylenediamine, hexamethylenediamine, methylpentamethylenediamine, diaminocyclohexane, piperazine, 4,4'-dipiperidinyl, toluene-2,4-diamine or p,p'-diaminodiphenylmethane.

17. A printing ink according to Claim 15, in which the diamine is piperazine.

18. A printing ink according to any one of the preceding Claims, in which the aminoamide thermoplastic polymer has an amine number of from 40 to 60mgKOH/g.

19. A printing ink according to according to any one of the preceding Claims, in which the aminoamide thermoplastic polymer has an amine number of from 45 to 55mgKOH/g.

20. A printing ink according to according to any one of the preceding Claims, in which the aminoamide thermoplastic polymer has an amine number of about 50mgKOH/g.

21. A printing ink according to according to any one of the preceding Claims, in which the ratio of the initial (meth)acrylate groups of the polyol ester to the initial amino functional groups of the aminoamide polymer is at least 4:1.

22. A printing ink according to any one of the preceding Claims, in which the ratio of the initial (meth)acrylate groups of the polyol ester to the initial amino functional groups of the aminoamide polymer is at least 8:1.

23. A printing ink according to Claim 22, in which the ratio of the initial (meth)acrylate groups of the polyol ester to the initial amino functional groups of the aminoamide polymer is greater than 8:1 and no more than 30:1.

24. A printing ink according to Claim 23, in which the ratio of the initial (meth)acrylate groups of the polyol ester to the initial amino functional groups of the aminoamide polymer is greater than 8:1 and no more than 20:1.

25. A printing ink according to Claim 24, in which the ratio of the initial (meth)acrylate groups of the polyol ester to the initial amino functional groups of the aminoamide polymer is greater than 8:1 and no more than 15:1.

26. A printing ink according to any one of the preceding Claims, formulated for lithographic printing.

## Patentansprüche

1. Eine Druckfarbe umfassend eine vernetzbare Komponente und einen Photoinitiator, wobei die vernetzbare Komponente wenigstens ein strahlungshärtbares acrylat-modifiziertes Aminoamidharz umfasst, welches das Produkt einer Michaeladdition eines Polyolesters, der wenigstens zwei Methacrylatestergruppen aufweist, mit einem thermoplastischen Aminoamidpolymer, wobei das thermoplastische Aminoamidpolymer das Reaktionsprodukt eines Polyamins mit einer Säurekomponente ist, weiche eine polymerisierte ungesättigte Fettsäure und eine monofunktionelle C₂- bis C₂₂-Fettsäure umfasst, wobei von 1 bis 25% der Säurefunktionen, die das Aminoamidpolymer bildern, von der monofunktionellen C₂- bis C₂₂-Fettsäure stammen, und wobei die Prozentangabe jegliche monofunktionellen Fettsäuren in der polymerisierten ungesättigten Fettsäure ausschließt, und wobei das Harz bei 25°C flüssig ist.

2. Eine Druckfarbe gemäß Anspruch 1, in welcher die monofunktionelle Fettsäure eine C₄- bis C₂₀-Fettsäure ist.

3. Eine Druckfarbe gemäß Anspruch 1, in weicher die monofunktionelle Fettsäure eine C₆- bis C₂₀-Fettsäure ist.

4. Eine Druckfarbe gemäß Anspruch 1, in welcher die monofuriktionelle Fettsäure Laurinsäure, Leinölfettsäure, Tallölfettsäure, Pelargonsäure, Oktansäure, Kokosnussölfattsäure, Sojaölfettsäure, Olivenölfettsäure, Erdnussölfettsäure, Baumwollsamenölfettsäure, Caprinsäure, Myristinsäure, Palmitinsäure, Stearinsäure, Palmitoleinsäure, Ölsäure, Linolsäure, Linolensäure, Eleostearinsäure, Rizinolsäure, Hexansäure oder eine Mischung von beliebigen zweien oder mehreren davon ist.

5. Eine Druckfarbe gemäß Anspruch 1, In welcher die monofunktionelle Fettsäure Oktansäure oder Nonansäure ist.

6. Eine Druckfarbe gemäß irgendeinem der vorhergehenden Ansprüche, in welcher die monofunktionelle Fettsäure von 3 bis 20% der Säurefunktionalität der Säurekomponente umfasst.

7. Eine Druckfarbe gemäß irgendeinem der vorhergehenden Ansprüche, in weicher die monofunktionelle Fettsäure von 4,5 bis 20% der Säurefunktionalität der Säurekomponente umfasst.

8. Eine Druckfarbe gemäß irgendeinem der vorhergehenden Ansprüche, in welcher der Polyolester wenigstens drei Methacrylatgruppen umfasst.

9. Eine Druckfarbe gemäß Anspruch 8, in welcher der Polyolester ein Acrylat mit einer Funktionalität von 3 oder 4 ist.

10. Eine Druckfarbe gemäß irgendeinem der vorhergehenden Ansprüche, in welcher der Polyolester ein Acrylat oder Methacrylat eines C₂ bis C₂₀ aliphatischen oder cycloaliphatischen Polyols ist.

11. Eine Druckfarbe gemäß Anspruch 10, in weicher der Polyolester Glyceroltriacrylat, Glyceroltrimethacrylat, Sorbitoltriacrylat, Sorbitoltrimethacrylat, Trimethylolethantriacrylat, Trimethylolethantrimethacrylat, Trimethylolpropantriacrylat, Dimethylolpropantetraacrylat, Dimethylolpropantetramethacrylat, Trimethylolpropantrimethacrylat, Ethoxylattrimethylolpropantriacrylat, Ethoxylattrimethylolpropantrimethacrylat, Glycerolpropoxylattriacrylat, Glycerolpropoxytattrimethacrylat, Pentaerythritoltriacrylat, Pentaerythritoltrimethacrylat, Pentaerythritoltetraacrylat, Pentaerythritoitetramethacrylat, Dipentaerythritolhexaacrylat, Dipentaerythritolhexamethacrylat, Ethoxylatpentaerythritoltetraacrylat, Propoxylatpentaerythritoltetraacrylat, Saccharose-Pantaacrylat, Saccharose-Pentamethacrylat, Saccharose-Tetraacrylat, Saccharose-Tetramethacrylat, Saccharose-Triacrylat oder Saccharose-Trimethacrylat ist.

12. Eine Druckfarbe gemäß Anspruch 10, in welcher der Polyolester Glycerolpropoxylattriacrylat ist.

13. Eine Druckfarbe gemäß Irgendeinem der vorhergehenden Ansprüche, in welcher das Aminoamidpolymer ein Reaktionsprodukt einer polymerisierten ungesättigten Fettsäure mit einem Diamin ist.

14. Eine Druckfarbe gemäß Anspruch 13, in welcher die polymerisierte ungesättigte Fettsäure eine Dimersäure ist.

15. Eine Druckfarbe gemäß Anspruch 13 oder Anspruch 14, in welcher das Diamin ein aliphatisches, cycloaliphatisches oder aromatisches Diamin mit 2 bis 36 Kohlenstoffatomen ist.

16. Eine Druckfarbe gemäß Anspruch 15, in welcher das Diamin Ethylendiamin, Propylendiamin, Trimethylendiamin, Tetramethylendiamin, Hexamethylendiamin, Methylpentamethylendiamin, Diaminocyclohexan, Piperazin, 4,4'-Dipiperidinyltoluen-2,4-diamin oder p,p'-Diaminodiphenylmethan ist.

17. Eine Druckfarbe gemäß Anspruch 15, in welcher das Diamin Piperazin ist.

18. Eine Druckfarbe gemäß irgendeinem der vorhergehenden Ansprüche, in welcher das thermoplastische Aminoamidpolymer eine Aminzahl von 40 bis 60 mg KOH/g hat.

19. Eine Druckfarbe gemäß irgendeinem der vorhergehenden Ansprüche, in welcher das thermoplastische Aminoamidpolymer eine Aminzahl von 45 bis 55 mg KOH/g hat.

20. Eine Druckfarbe gemäß irgendeinem der vorhergehenden Ansprüche, in welcher das thermoplastische Aminoamidpolymer eine Aminzahl von etwa 50 mg KOH/g hat.

21. Eine Druckfarbe gemäß irgendeinem der vorhergehenden Ansprüche, in welcher das Verhältnis der anfänglichen Methacrylatgruppen des Polyolesters zu den anfänglichen aminofunktionellen Gruppen des Aminoamidpolymers wenigstens 4 :1 ist.

22. Eine Druckfarbe gemäß irgendeinem der vorhergehenden Ansprüche, in welcher das Verhältnis der anfänglichen Methacrylatgruppen des Polyolesters zu den anfänglichen aminofunktionellen Gruppen des Aminoamidpolymers wenigstens 8 : 1 ist.

23. Eine Druckfarbe gemäß Anspruch 22, in welcher das Verhältnis der anfänglichen Methacrylatgruppen des Polyolesters zu den anfänglichen aminofunktionellen Gruppen des Aminoamidpolymers größer als 8 : 1 und nicht mehr als 30 : 1 ist.

24. Eine Druckfarbe gemäß Anspruch 23, in welcher das Verhältnis der anfänglichen Methacrylatgruppen des Polyolesters zu den anfänglichen aminofunktionellen Gruppen des Aminoamidpolymers größer als 8 : 1 und nicht mehr als 20 : 1 ist.

25. Eine Druckfarbe gemäß Anspruch 24, in welcher das Verhältnis der anfänglichen Methacrylatgruppen des Polyolesters zu den anfänglichen aminofunktionellen Gruppen Aminogruppen des Aminoamidpolymers größer als 8 : 1 und nicht mehr als 15 : 1 ist.

26. Eine Druckfarbe gemäß irgendeinem der vorhergehenden Ansprüche, die so formuliert ist, dass sie sich für lithografisches Drucken eignet.

## Revendications

1. Encre d'impression comprenant un composant réticulable et un photo-initiateur, où le composant réticulable comprend au moins une résine d'aminoamide modifiée par acrylate durcissable par rayonnement qui est le produit de l'addition de Michael d'un ester de polyol ayant au moins deux groupes ester (méth)acrylate avec un polymère thermoplastique d'aminoamide, le polymère thermoplastique d'aminoamide étant le produit de la réaction d'une polyamine avec un composant acide qui comprend un acide gras insaturé polymérisé et un acide gras C₂-C₂₂ monofonctionnel, de 1 à 25 % de la fonctionnalité acide formant le polymère d'aminoamide étant ledit acide gras C₂-C₂₂ monofonctionnel, et ledit pourcentage excluant tout acide gras monofonctionnel dans l'acide gras insaturé polymérisé, la résine étant liquide à 25°C.

2. Encre d'impression selon la revendication 1 où ledit acide gras monofonctionnel est C₄-C₂₀.

3. Encre d'impression selon la revendication 1 où ledit acide gras monofonctionnel est C₆-C₂₀.

4. Encre d'impression selon la revendication 1 où ledit acide gras monofonctionnel est l'acide laurique, un acide gras d'huile de lin, un acide gras de tallol, l'acide pélargonique, l'acide octanoïque, un acide gras d'huile de copra, un acide gras d'huile de soja, un acide gras d'huile d'olive, une acide gras d'huile d'arachide, un acide gras d'huile de graines de coton, l'acide caprique, l'acide myristique, l'acide palmitique, l'acide stéarique, l'acide palmitoléique, l'acide oléique, l'acide linoléique, l'acide linolénique, l'acide éléostéarique, l'acide ricinoléique, l'acide hexanoïque ou un mélange de deux quelconques ou plus de ceux-ci.

5. Encre d'impression selon la revendication 1 où ledit acide gras monofonctionnel est l'acide octanoïque ou l'acide nonanoïque.

6. Encre d'impression selon l'une quelconque des revendications précédentes où l'acide gras monofonctionnel forme de 3 à 20 % de la fonctionnalisé acide du composant acide.

7. Encre d'impression selon l'une quelconque des revendications précédentes où l'acide gras monofonctionnel forme de 4,5 à 20 % de la fonctionnalité acide du composant acide.

8. Encre d'impression selon l'une quelconque des revendications précédentes où ledit ester de polyol a au moins trois groupes (méth)acrylates.

9. Encre d'impression selon la revendication 8 où l'ester de polyol est un acrylate d'une fonctionnalité de 3 ou 4.

10. Encre d'impression selon l'une quelconque des revendications précédentes où l'ester de polyol est un acrylate ou méthacrylate d'un polyol C₂-C₂₀ aliphatique ou cycloallphatique.

11. Encre compression selon la revendication 10 où l'ester de polyol est le triacrylate de glycérol, le triméthacrylate de glycérol, le triacrylate de sorbitol, le triméthacrylate de sorbitol, le triacrylate de triméthyloléthane, le triméthacrylate de triméthyloléthane, le triacrylate de triméthylolpropane, le tétraacrylate de diméthylolpropane, le tétraméthacrylate de diméthylolpropane, le triméthacrylate de triméthylolpropane, le triacrylate de triméthylolpropane éthoxylé, le triméthacrylate de triméthylolpropane éthoxylé, le triacrylate propoxylate de glycérol, le triméthacrylate propoxylate de glycérol, le triacrylate de pentaérythritol, le triméthacrylate de pentaérythritol, le tétraacrylate de pentaérythritol, le tétraméthacrylate de pentaérythritol, l'hexaacrylate de dipentaérythritol, l'hexaméthacrylate de dipentaérythritol, le tétraacrylate de pentaérythritol éthoxylé, le tétraacrylate de pentaérythritol propoxylé, le pentaacrylate de saccharose, le pentaméthacrylate de saccharose, le tétraacrytate de saccharose, le tétraméthacrylate de saccharose, le triacrylate de saccharose ou le triméthacrylate de saccharose.

12. Encre d'impression selon la revendication 10 où l'ester de polyol est le triacrylate propoxylate de glycérol.

13. Encre d'impression selon l'une quelconque des revendication précédentes où le polymère d'aminoamide est un produit de la réaction d'un acide gras insaturé polymérisé avec une diamine.

14. Encre d'impression selon la revendication 13 où l'acide gras insaturé polymérisé est un acide dimère.

15. Encre impression selon la revendication 13 ou la revendication 14 où la diamine est une diamine aliphatique, cycloaliphatique ou aromatique ayant de 2 à 36 atomes de carbone.

16. Encre d'impression selon la revendication 15 où la diamine est l'éthylènediamine, la propylènediamine, la triméthylénediamine, la tétraméthylènediamine, l'hexaméthylènediamine, la méthylpentaméthylènediamine, le diaminocyclohexane, la pipérazine, la 4,4'-dipipéridinyl, toluène-2,4-diamine ou le p,p'-diaminodlphénylméthane.

17. Encre d'impression selon la revendication 15 où la diamine est la pipérazine.

18. Encre d'impression selon l'une quelconque des revendications précédentes où le polymère thermoplastique d'aminoamide a un indice d'amine de 40 à 60 mg de KOH/g.

19. Encre d'impression selon l'une quelconque des revendications précédentes où le polymère thermoplastique d'aminoamide a un indice d'amine de 45 à 55 mg de KOH/g.

20. Encre d'impression selon l'une quelconque des revendication précédentes où le polymère thermoplastique d'aminoacide a un indice d'amine d'environ 50 mg de KOH/g.

21. Encre d'impression selon l'une quelconque des revendications précédentes où le rapport des groupes (méth)acryalates initiaux de l'ester de polyol aux groupes fonctionnels amino initiaux du polymère d'aminoamide est d'au moins 4:1.

22. Encre d'impression selon l'une quelconque des revendications précédentes où le rapport des groupes (méth)acrylates initiaux de l'ester de polyol aux groupes fonctionnels amino initiaux du polymère d'aminoamide est d'au moins 8:1.

23. Encre d'impression selon la revendication 22 où le rapport des groupes (méth)acrylates initiaux de l'ester de polyol aux groupes fonctionnels amino initiaux du polymère d'aminoamide est supérieur à 8:1 et pas supérieur à 30:1.

24. Encre d'impression selon la revendication 23 où le rapport des groupes (méth)acrylates initiaux de l'ester de polyol aux groupes fonctionnels amino initiaux du polymère d'aminoamide est supérieur à 8:1 et pas supérieur à 20:1.

25. Encre d'impression selon la revendication 24 où le rapport des groupes (méth)acrylates initiaux de l'ester de polyol aux groupes fonctionnels amino initiaux du polymère d'aminoamide est supérieur à 8:1 et pas supérieur à 15:1.

26. Encre d'impression selon l'une quelconque des revendications précédentes formulée pour l'impression lithographique.
